# FASCICULE DE BREVET EUROPEEN

(11) **EP 3 179 550 B1**
(45) Date de publication et mention de la délivrance du brevet: **07.11.2018**
(21) Numéro de dépôt: 16202777.5
(22) Date de dépôt: 07.12.2016
(51) Int. Cl.: H01M 10/0569, H01M 10/052, H01M 4/587, H01M 4/38, H01M 4/36, H01M 4/58, H01M 10/0525, H01M 10/0567

(54) **CELLULE ÉLECTROCHIMIQUE POUR BATTERIE AU LITHIUM COMPRENANT UNE ÉLECTRODE À BASE D'UN MATÉRIAU COMPOSITE SILICIUM-GRAPHITE ET UN ÉLECTROLYTE SPÉCIFIQUE**
ELEKTROCHEMISCHE ZELLE FÜR EINE LITHIUM-BATTERIE, DIE EINE ELEKTRODE AUF DER BASIS EINES SILIZIUM-GRAPHIT-VERBUNDMATERIALS UND EINEN SPEZIFISCHEN ELEKTROLYTEN UMFASST
ELECTROCHEMICAL CELL FOR LITHIUM BATTERY COMPRISING AN ELECTRODE MADE OF A SILICON-GRAPHITE COMPOSITE MATERIAL AND A SPECIFIC ELECTROLYTE

(30) Priorité: 08.12.2015 FR 1562010
(43) Date de publication de la demande: 14.06.2017
(73) Titulaire: COMMISSARIAT À L'ÉNERGIE ATOMIQUE ET AUX ÉNERGIES ALTERNATIVES, 75015 Paris (FR)
(72) Inventeur: GUTEL, Thibaut, 38113 VEUREY VOROIZE (FR); BOUTAFA, Laura, 38130 ECHIROLLES (FR); TOMASI, Daniel, 38119 VILLARD SAINT CHRISTOPHE (FR)
(74) Mandataire: Brevalex

(56) Documents cités:
- CN-A- 102 082 290
- DE-A1-102014 202 156
- JP-A- H03 289 063
- JP-A- H07 169 460
- JP-A- 2000 040 524
- KR-A- 20140 066 589
- US-A1- 2015 111 102
- US-B1- 6 221 533

## Description

### DOMAINE TECHNIQUE

La présente invention a trait à une cellule électrochimique pour batterie au lithium, dont l'une de ses électrodes comprend, comme matériau actif, un matériau composite silicium-graphite et comprenant un électrolyte spécifique, la combinaison de ces caractéristiques permettant, notamment, d'obtenir de très bonnes performances électrochimiques et, plus particulièrement, une importante rétention de capacité en cyclage et également une efficacité coulombique élevée au premier cycle.

Le domaine général de l'invention peut être ainsi défini comme étant celui des batteries au lithium et, plus spécifiquement, des batteries du type lithium-ion.

Les batteries du type lithium-ion sont de plus en plus utilisées comme source d'énergie autonome, en particulier, dans les équipements électroniques portables (tels que les téléphones mobiles, les ordinateurs portables, l'outillage), où elles remplacent progressivement les accumulateurs nickel-cadmium (NiCd) et nickel-hydrure métallique (NiMH). Elles sont également très utilisées pour fournir l'alimentation en énergie nécessaire aux nouvelles microapplications, telles que les cartes à puce, les capteurs ou autres systèmes électromécaniques.

Les batteries du type lithium-ion fonctionnent sur le principe d'insertion-désinsertion (ou lithiation-délithiation) du lithium selon le principe suivant.

Lors de la décharge de la batterie, le lithium désinséré de l'électrode négative sous forme ionique Li⁺ migre à travers l'électrolyte conducteur ionique et vient s'intercaler dans le réseau cristallin du matériau actif de l'électrode positive. Le passage de chaque ion Li⁺ dans le circuit interne de la batterie est exactement compensé par le passage d'un électron dans le circuit externe, générant ainsi un courant électrique. La densité d'énergie massique libérée par ces réactions est à la fois proportionnelle à la différence de potentiel entre les deux électrodes et à la quantité de lithium qui se sera intercalée dans le matériau actif de l'électrode positive.

Lors de la charge de la batterie, les réactions se produisant au sein de la batterie sont les réactions inverses de la décharge, à savoir que :
- l'électrode négative va insérer du lithium dans le réseau du matériau la constituant ; et
- l'électrode positive va libérer du lithium.

De par ce principe de fonctionnement, les batteries du type lithium-ion nécessitent donc la présence au niveau des électrodes d'un matériau apte à insérer ou désinsérer du lithium, ce matériau pouvant être notamment pour les électrodes négatives des matériaux carbonés, et notamment du graphite, qui est particulièrement adapté à l'insertion ou désinsertion du lithium, du fait de sa structure lamellaire.

En outre, le graphite présente une capacité spécifique théorique de l'ordre de 370 mAh/g (correspondant à la formation de l'alliage LiC₆) et une capacité spécifique pratique de l'ordre de 320 mAh/g.

Toutefois, le graphite présente une forte irréversibilité lors de la première charge et une perte continue de capacité en cyclage.

Pour contourner les inconvénients liés au graphite, une autre solution peut consister à remplacer celui-ci par d'autres matériaux d'électrode et, notamment, par du silicium.

C'est ainsi qu'il a été mis en évidence que l'insertion du silicium dans une électrode négative permettait d'augmenter significativement la capacité spécifique pratique de l'électrode négative liée à l'insertion du lithium dans celle-ci, laquelle est de 320 mAh/g pour une électrode en graphite et de l'ordre de 3580 mAh/g pour une électrode à base de silicium (correspondant à la formation de l'alliage Li₁₅Si₄ lors de l'insertion à température ambiante du lithium dans le silicium). Ainsi, par le biais de prévisions simples, il est possible d'envisager un gain d'environ 40 et 35%, respectivement en énergie volumique et en énergie massique, si l'on substitue le graphite par du silicium dans un accumulateur classique de la filière « lithium-ion ». Par ailleurs, la fenêtre de potentiel de fonctionnement de l'alliage lithium-silicium de formule Li₁₅Si₄ (0,4-0,05 V/Li-Li⁺) plus élevée que celle du graphite, permet d'éviter la formation d'un dépôt de lithium métallique et les risques associés, tout en laissant la possibilité de procéder à des charges plus rapides. De plus, il est établi que la réaction de formation de l'alliage lithium-silicium, conduisant à une capacité spécifique pratique très élevée (de l'ordre de 3578 mAh/g), est réversible.

Néanmoins, l'utilisation du silicium dans une électrode négative d'un accumulateur au lithium pose un certain nombre de problèmes.

En particulier, lors de la réaction de formation de l'alliage silicium-lithium (correspondant à l'insertion du lithium dans l'électrode négative en processus de charge), l'expansion volumique entre la phase délithiée et la phase lithiée peut atteindre 280%. Cette forte expansion, suivie d'une contraction de même amplitude (correspondant à la désinsertion du lithium dans l'électrode négative lors du processus de décharge) entraîne rapidement des dommages mécaniques irréversibles de l'électrode et à terme, une perte de contact de l'électrode négative avec le collecteur de courant sous-jacent. Il peut s'ensuivre ainsi une perte rapide de la capacité en cyclage.

Pour bénéficier des avantages liés à l'utilisation du silicium comme matériau actif d'électrode tout en gommant les inconvénients liés à l'expansion volumique susmentionnée, il a été proposé d'utiliser, en remplacement du silicium, un matériau composite comprenant à la fois du silicium et du graphite, lequel permet de préserver l'intégrité de l'électrode même après un nombre important de cycles de charge-décharge.

L'utilisation d'un matériau composite silicium-graphite comme matière active de l'électrode négative dans des batteries secondaires au lithium, a par exemple été décrite dans les documents US 2015/111102 A1, DE 10 2014 202156 A1 et CN 102 082 290 A.

En choisissant de mettre au point une cellule de batterie lithium-ion avec une électrode comprenant, comme matériau actif, un composite silicium-graphite, la difficulté réside dans le choix d'un électrolyte liquide, qui soit compatible avec ce type de matériaux.

Aussi, les auteurs de la présente invention se sont fixé ce but et, de manière plus spécifique, ils se sont fixé pour but de proposer un électrolyte liquide, qui, en combinaison avec une électrode comprenant, comme matériau actif, un composite silicium-graphite, permet d'obtenir de très bonnes performances électrochimiques et, plus particulièrement, une importante rétention de capacité en cyclage et également une efficacité coulombique élevée au premier cycle.

### EXPOSÉ DE L'INVENTION

Ainsi, l'invention a trait à une cellule électrochimique pour batterie au lithium comprenant deux électrodes de polarité opposée, dont l'une des électrodes comporte, comme matériau actif, un matériau composite graphite-silicium et comprenant un électrolyte comprenant un sel de lithium et au moins un composé choisi parmi les composés oxolanes, les composés oxanes et les mélanges de ceux-ci.

Le choix motivé des ingrédients constitutifs de l'électrolyte susmentionné contribue à l'obtention de très bonnes performances électrochimiques et, plus particulièrement, une importante rétention de capacité en cyclage et également une efficacité coulombique élevée au premier cycle.

Avant d'entrer plus en détail dans l'exposé de cette invention, nous précisons les définitions suivantes.

Par matériau actif, on entend, classiquement, dans ce qui précède et ce qui suit, le matériau qui est directement impliqué dans les réactions d'insertion et de désinsertion du lithium.

Par matériau composite graphite-silicium, on entend classiquement, dans ce qui précède et ce qui suit, un matériau comprenant des particules de silicium agrégées sur des particules de graphite, l'ensemble étant dispersé au sein d'une matrice de carbone, par exemple, une matrice de carbone désordonné.

Comme mentionné ci-dessus, l'électrolyte comprend un sel de lithium et au moins un composé choisi par les composés oxolanes, les composés oxanes et les mélanges de ceux-ci, lequel composé remplit classiquement la fonction de solvant(s) organique(s).

Le sel de lithium peut être choisi dans le groupe constitué par LiPF₆, LiClO₄, LiBF₄, LiAsF₆, LiCF₃SO₃, le 4,5-dicyano-2-(trifluorométhyl)imidazolate de lithium (connu sous l'abréviation LiTDl) ou de la famille des sulfonylimidures, tels que le bis(trifluorométhylsulfonyl)imidure de lithium (connu sous l'abréviation LiTFSl) LiN[SO₂CF₃]₂, le bis(fluorosulfonyl)imidure de lithium (connu sous l'abréviation LiFSl) LiN[SO₂F]₂, le 1,1,2,2,3,3-hexafluoropropane-1,3-disulfonylimidure de lithium LiN[SO₂(CF₂)₃SO₂] et les mélanges de ceux-ci, la préférence portant sur le sel LiTFSl.

Le sel de lithium peut être présent, dans l'électrolyte, selon une concentration allant de 0,1M à 5M, par exemple, 1M.

Par composé oxolane, on entend classiquement un composé cyclique dont le cycle comprend 5 atomes, dont au moins un des atomes du cycle est un atome d'oxygène, ledit cycle pouvant comporter au niveau des atomes de carbone de son cycle, un ou plusieurs substituants, tels que des groupes alkyles.

A titre d'exemples de composés oxolanes, on peut citer :
- les composés oxolanes comprenant, dans le cycle, un atome d'oxygène, tels que le tétrahydrofurane ou le 2-méthyltétrahydrofurane ;
- les composés oxolanes comprenant, dans le cycle, deux atomes d'oxygène, tels que :
   *le 1,3-dioxolane de formule (I) suivante : 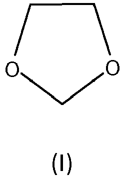
   *le 2-méthyl-1,3-dioxolane de formule (II) suivante : 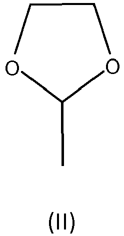
   *le 4-méthyl-1,3-dioxolane de formule (III) suivante :

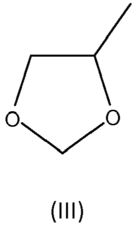

Par composé oxane, on entend classiquement un composé cyclique dont le cycle comprend 6 atomes, dont au moins un des atomes du cycle est un atome d'oxygène, ledit cycle pouvant comporter au niveau des atomes de carbone de son cycle, un ou plusieurs substituants, tels que des groupes alkyles.

A titre d'exemples de composés oxanes, on peut citer les composés oxanes comprenant, dans le cycle, deux atomes d'oxygène, tels que le 1,4-dioxane de formule (IV) suivante :

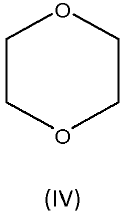

Comme mentionné ci-dessus, l'électrolyte comprend au moins un composé choisi parmi les composés oxanes, les composés oxolanes et les mélanges de ceux-ci, ce qui signifie, en d'autres termes, que :
- l'électrolyte peut comprendre un seul composé oxane ou un seul composé oxolane ; ou
- l'électrolyte peut comprendre un mélange de ceux-ci, par exemple, un mélange comprenant plusieurs composés oxanes, un mélange comprenant plusieurs composés oxolanes ou encore un mélange comprenant un ou plusieurs composés oxanes et un ou plusieurs composés oxolanes.

A titre d'exemple, lorsqu'il s'agit d'un mélange, il peut s'agir d'un mélange comprenant du 1,3-dioxolane et du 1,4-dioxane.

En outre, l'électrolyte peut comprendre, également, au moins un autre composé choisi parmi les éthers linéaires, avec, avantageusement, pour condition que le ou les composés oxanes et/ou le ou les composés oxolanes représentent au moins 50% en volume du mélange composé par le ou les éthers linéaires et le ou les composés oxanes et/ou le ou les composés oxolanes.

A titre d'exemples de composés éthers linéaires, on peut citer :
- les éthers comprenant un atome d'oxygène, tels que le diméthyléther (connu sous l'abréviation DME) ;
- les éthers comprenant deux atomes d'oxygène, tels que le diéthylèneglycol diméthyléther (connus sous l'abréviation DEGDME) ;
- les éthers comprenant trois atomes d'oxygène, tels que le tétraéthyléneglycol diméthyléther (connus sous l'abréviation TEGME).

A titre d'exemple, un mélange approprié peut être un mélange comprenant du 1,3-dioxolane et du tétraéthyléneglycol diméthyléther, par exemple, dans des proportions volumiques (50/50).

De par la nature des ingrédients susmentionnés, l'électrolyte susmentionné est un électrolyte liquide non aqueux conducteur d'ions lithium classiquement disposé entre les deux électrodes de signe opposée de la cellule (à savoir, l'électrode positive et l'électrode négative).

Cet électrolyte peut être amené à imprégner un séparateur poreux, lequel est disposé entre l'électrode positive et l'électrode négative de la cellule électrochimique.

Ce séparateur peut être en un matériau poreux, tel qu'un matériau polymérique, apte à accueillir dans sa porosité l'électrolyte liquide.

L'électrolyte peut être uniquement constitué d'un composé choisi parmi les composés oxolanes, les composés oxanes et les mélanges de ceux-ci, d'un sel de lithium et éventuellement, d'au moins un autre composé choisi parmi les éthers linéaires tels que définis ci-dessus, ce qui permet, en combinaison avec l'utilisation d'un composite graphite-silicium comme matériau actif d'une des électrodes, d'obtenir de très bonnes performances électrochimiques et, plus spécifiquement, une forte rétention de capacité en cyclage et une efficacité coulombique élevée au premier cycle.

En variante, même si les ingrédients susmentionnés se suffisent à eux seuls pour atteindre les effets techniques mentionnés ci-dessus, l'électrolyte peut comprendre, en outre, un ou plusieurs additifs choisis parmi le carbonate de vinylène (connu également sous l'abréviation VC), le carbonate de fluoroéthylène et les mélanges de ceux-ci, ces additifs répondant respectivement aux formules (V) et (VI) suivantes : 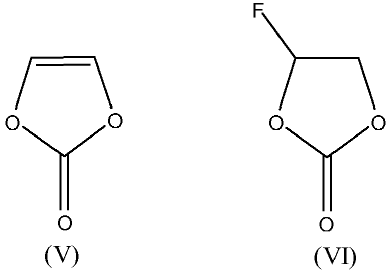 ce ou ces additifs pouvant être présents en une teneur allant de 1% à 30% en masse par rapport à la masse totale du ou desdits solvants organiques et du ou des sels de lithium.

A titre d'exemples, des électrolytes spécifiques susceptibles dans la constitution des cellules électrochimiques de l'invention sont :
a) un électrolyte comprenant du 1,3-dioxolane et un sel de lithium LiTFSI, par exemple, à une concentration de 1 mol.L⁻¹ ;
b) un électrolyte comprenant du tétrahydrofurane et un sel de lithium LiTFSI, par exemple, à une concentration de 1 mol.L⁻¹ ;
c) un électrolyte comprenant du 2-méthyl-1,3-dioxolane et un sel de lithium LiTFSI, par exemple, à une concentration de 1 mol.L⁻¹ ;
d) un électrolyte comprenant du 4-méthyl-1,3-dioxolane et un sel de lithium LiTFSI, par exemple, à une concentration de 1 mol.L⁻¹ ;
e) un électrolyte comprenant un mélange de 1,3-dioxolane et de 1,4-dioxane (50/50 en volume) et un sel de lithium LiTFSI, par exemple, à une concentration de 1 mol.L⁻¹ ;
f) un électrolyte comprenant un mélange de 1,3-dioxolane et de tétraéthylèneglycol diméthyléther (50/50 en volume) et un sel de lithium LiTFSI, par exemple, à une concentration de 1 mol.L⁻¹ ;
g) un électrolyte comprenant du 1,3-dioxolane, un sel de lithium LiTFSI, par exemple, à une concentration de 1 mol.L⁻¹ et du carbonate de vinylène à hauteur de 2% massique par rapport à la masse totale du 1,3-dioxolane et du sel de lithium ;
h) un électrolyte comprenant du 1,3-dioxolane, un sel de lithium LiTFSI, par exemple, à une concentration de 1 mol.L⁻¹ et du carbonate de fluoroéthylène à hauteur de 10% massique par rapport à la masse totale du 1,3-dioxolane et du sel de lithium ;
i) un électrolyte comprenant du 1,3-dioxolane, un sel de lithium LiTFSI, par exemple, à une concentration de 1 mol.L⁻¹, du carbonate de vinylène à hauteur de 2% par rapport à la masse totale du 1,3-dioxolane et du sel de lithium, du carbonate de fluoroéthylène à hauteur de 10% massique par rapport à la masse totale du 1,3-dioxolane et du sel de lithium ; ou
j) un électrolyte comprenant du 2-méthyltétrahydrofurane et un sel de lithium LiTFSI, par exemple, à une concentration de 1 mol.L⁻¹.

L'une des électrodes comprend, comme matériau actif, un matériau composite graphite-silicium, ce matériau composite pouvant être présent à un teneur allant de 50 à 95 % massique par rapport à la masse totale de l'électrode (hors collecteur de courant).

Outre la présence d'un matériau actif, l'électrode peut comprendre un liant polymérique, tel que du polyfluorure de vinylidène (connu sous l'abréviation PVDF), un mélange carboxyméthylcellulose (connu sous l'abréviation CMC) avec un latex du type styrène-butadiène (connu sous l'abréviation SBR) ou avec de l'acide polyacrylique (connu sous l'abréviation PAA) ainsi que un ou plusieurs adjuvants conducteurs de l'électricité, qui peuvent être des matériaux carbonés comme du noir de carbone.

Aussi, d'un point de vue structural, l'électrode peut se présenter sous forme d'un matériau composite comprenant une matrice en liant(s) polymérique(s), au sein de laquelle sont dispersées des charges constituées par le matériau actif et éventuellement le ou adjuvants conducteurs de l'électricité.

Par exemple, l'électrode comprenant, comme matériau actif, un matériau composite graphite-silicium, peut être une électrode négative.

Par électrode négative, on entend, classiquement, dans ce qui précède et ce qui suit, l'électrode qui fait office d'anode, quand le générateur débite du courant (c'est-à-dire lorsqu'il est en processus de décharge) et qui fait office de cathode, lorsque le générateur est en processus de charge.

Dans ce cas, l'autre électrode de la cellule est une électrode positive, ce qui signifie, en d'autres termes, que cette autre électrode fait office de cathode, quand le générateur débite du courant (c'est-à-dire lorsqu'il est en processus de décharge) et qui fait office d'anode lorsque le générateur est en processus de charge.

Dans ce cas, l'électrode positive peut comprendre, comme matériau actif, un matériau d'insertion du lithium du type phosphate lithié comprenant au moins un élément métallique de transition.

Comme exemples de composés phosphates lithiés comprenant au moins un élément métallique de transition, on peut citer les composés de formule LiM¹PO₄, où M¹ est choisi parmi Fe, Mn, Co et les mélanges de ceux-ci, tel que LiFePO₄.

Outre la présence d'un matériau actif, tel que ceux définis ci-dessus, l'électrode positive peut comprendre, en outre, un liant polymérique ainsi que un ou plusieurs adjuvants conducteurs de l'électricité, tels que définis ci-dessus, auquel cas l'électrode se présente, d'un point de vue structural, comme un matériau composite comme défini ci-dessus.

Des cellules conformes à l'invention peuvent être des cellules comportant, une électrode négative, dont le matériau actif est un composite graphite-silicium et une électrode positive, dont le matériau actif est du LiFePO₄ et dont l'électrolyte est un électrolyte b) tel que défini ci-dessus.

Selon un autre mode de réalisation, l'électrode comprenant, comme matériau actif, un matériau composite graphite-silicium, peut être une électrode positive, auquel cas l'autre électrode de la cellule est une électrode négative.

Dans ce cas, l'électrode négative peut comprendre, comme matériau actif, du lithium métallique.

Des cellules conformes à l'invention peuvent être des cellules comportant, une électrode négative, dont le matériau actif est du lithium métallique et une électrode positive, dont le matériau actif est un composite graphite-silicium et dont l'électrolyte est un électrolyte a), b), c), d), e), f), g), h), i) ou j) tel que défini ci-dessus.

Enfin, l'invention a trait à une batterie au lithium comprenant une ou plusieurs cellules électrochimiques telle(s) que définie(s) ci-dessus.

D'autres caractéristiques et avantages de l'invention apparaîtront du complément de description qui suit et qui se rapporte à des modes de réalisation particuliers.

Bien entendu, ce complément de description n'est donné qu'à titre d'illustration de l'invention et n'en constitue en aucun cas une limitation.

### BRÈVE DESCRIPTION DES DESSINS

La figure 1 est un graphique illustrant l'évolution de la capacité spécifique C (en mAh/g) en fonction du nombre de cycles N pour les cellules électrochimiques décrites dans l'exemple 1.
La figure 2 est un graphique illustrant l'évolution de la capacité spécifique C (en mAh/g) en fonction du nombre de cycles N pour les cellules décrites dans l'exemple 2.
La figure 3 est un graphique illustrant l'évolution du pourcentage de la capacité spécifique initiale %C (en %) en fonction du nombre de cycles N pour les cellules décrites dans l'exemple 3.
La figure 4 est un graphique illustrant l'évolution de l'efficacité (c'est-à-dire le rapport de la capacité spécifique en décharge sur la capacité spécifique en charge (exprimée en gramme de matériau actif LiFePO₄)) exprimé en %) en fonction du nombre de cycles N pour les cellules décrites dans l'exemple 3.
La figure 5 est un graphique illustrant l'évolution de la capacité spécifique C (en mAh/g) en fonction du nombre de cycles N pour les cellules décrites dans l'exemple 4.

### EXPOSÉ DÉTAILLÉ DE MODES DE RÉALISATION PARTICULIERS

### EXEMPLE 1

Le présent exemple illustre des cellules électrochimiques conformes à l'invention et des cellules comparatives, se présentant sous forme d'une pile bouton comprenant :
- comme électrode négative, une électrode négative constituée de lithium métallique ; et
- comme électrode positive, une électrode comprenant, comme matériau actif, un composite silicium-graphite ; et
- un électrolyte disposé entre ladite électrode positive et l'électrode négative, dont la composition sera explicitée ci-dessous.

L'électrode négative est obtenue par découpe, dans un feuillard en lithium métallique, d'un disque de diamètre 16 mm.

L'électrode positive est obtenue par enduction, sur une feuille en cuivre, d'une encre composée de 90% massique d'un composite silicium-graphite, 5% massique d'un conducteur électronique (plus spécifiquement, un mélange de noir de carbone de grade Super P® et de fibres de carbone VGCF et 5% massique d'un liant polymérique (plus spécifiquement, un mélange de carboxyméthylcellulose (à 250 000 g/mol) et d'acide polyacrylique (à 250 000 g/mol)). Cette électrode est calandrée puis découpée sous forme d'un disque de diamètre 14 mm.

Les piles boutons sont fabriquées à partir de ces électrodes en empilant :
- un disque d'électrode négative ;
- un disque d'électrode positive ; et
- un séparateur composé de la superposition d'un disque en Viledon® (référence FS2207-25-DA WA) (qui est une membrane en fibres non tissées de polyoléfines (polypropylène/polyéthylène)) et d'un disque en Celgard® (référence C2400) (qui est une membrane en polypropylène), lequel séparateur est imbibé d'un électrolyte.

Les cellules électrochimiques non conformes à l'invention sont les suivantes :
- une première cellule comprenant, comme électrolyte, un électrolyte comprenant du diméthoxyéthane (DME), dans lequel est dissous du LiTFSI à une concentration de 1 mol/L ;
- une deuxième cellule comprenant, comme électrolyte, un électrolyte comprenant du diéthylène glycol diméthyl éther (DEGDME), dans lequel est dissous du LiTFSI à une concentration de 1 mol/L ;
- une troisième cellule comprenant, comme électrolyte, un électrolyte comprenant du tétraéthylène glycol diméthyléther (TEGDME), dans lequel est dissous du LiTFSI à une concentration de 1 mol/L.

Les cellules conformes à l'invention sont les suivantes :
- une quatrième cellule comprenant, comme électrolyte, un électrolyte comprenant du 1,3-dioxolane (DOL), dans lequel est dissous du LiTFSI à une concentration de 1 mol/L ;
- une cinquième cellule comprenant, comme électrolyte, un électrolyte comprenant du tétrahydrofurane, dans lequel est dissous du LiTFSI à une concentration de 1 mol/L ;
- une sixième cellule comprenant, comme électrolyte, un électrolyte comprenant un mélange TEGDME/DOL (50/50 en volume), dans lequel est dissous du LiTFSI à une concentration de 1 mol/L ; et
- une septième cellule comprenant, comme électrolyte, un électrolyte comprenant un mélange DOL/1,4-dioxane (50/50 en volume), dans lequel est dissous du LiTFSI à une concentration de 1 mol/L.

Ces différentes cellules sont soumises à un test de cyclage galvanostatique, consistant à appliquer un premier cycle de charge/décharge entre 1 V et 0,01 V à un régime C/20 avec un palier à 0,01 V maintenu jusqu'à atteindre un courant correspondant à un régime de C/100 puis un régime de C/10 pour les cycles consécutifs avec un palier à 0,01 V maintenu jusqu'à atteindre un courant correspondant à un régime de C/50 pour chaque cycle.

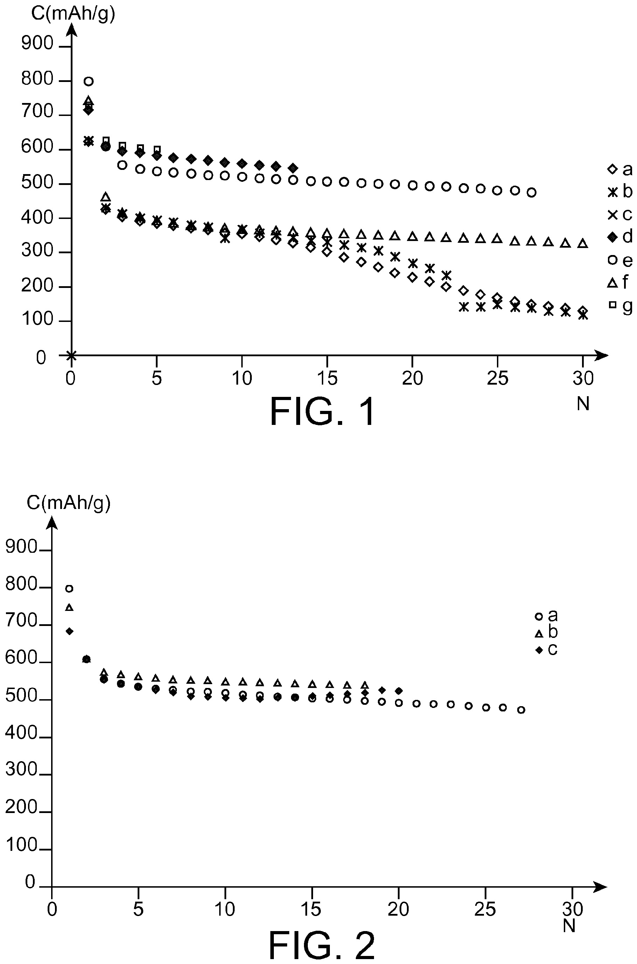

Les résultats sont reportés sur la figure 1, qui illustre l'évolution de la capacité spécifique C (en mAh/g) en fonction du nombre de cycles N pour les sept cellules susmentionnées, les courbes étant respectivement référencées de courbe a) pour la première cellule susmentionnée à courbe g) pour la septième cellule susmentionnée.

Il ressort clairement de ces courbes, que les cellules conformes à l'invention présentent une meilleure rétention en cyclage que les cellules comportant, notamment, un éther linéaire dans l'électrolyte (ce qui est le cas des première, deuxième et troisième cellules).

### EXEMPLE 2

Le présent exemple illustre des cellules électrochimiques conformes à l'invention, se présentant sous forme d'une pile bouton comprenant :
- comme électrode négative, une électrode négative constituée de lithium métallique ; et
- comme électrode positive, une électrode comprenant, comme matériau actif, un composite silicium-graphite ; et
- un électrolyte disposé entre ladite électrode positive et l'électrode négative, dont la composition sera explicitée ci-dessous.

L'électrode négative est obtenue par découpe, dans un feuillard en lithium métallique, d'un disque de diamètre 16 mm.

L'électrode positive est obtenue par enduction, sur une feuille en cuivre, d'une encre composée de 90% massique d'un composite silicium-graphite, 5% massique d'un conducteur électronique (plus spécifiquement, un mélange de noir de carbone de grade Super P® et de fibres de carbone VGCF et 5% massique d'un liant polymérique (plus spécifiquement, un mélange de carboxyméthylcellulose (à 250 000 g/mol) et de acide polyacrylique (à 250 000 g/mol). Cette électrode est calandrée puis découpée sous forme d'un disque de diamètre 14 mm.

Les piles boutons sont fabriquées à partir de ces électrodes en empilant :
- un disque d'électrode positive ;
- un disque d'électrode négative ; et
- un séparateur composé de la superposition d'un disque en Viledon® (référence FS2207-25-DA WA) (qui est une membrane en fibres non tissées de polyoléfines (polypropylène/polyéthylène)) et d'un disque en Celgard® (référence C2400) (qui est une membrane en polypropylène), lequel séparateur est imbibé d'un électrolyte.

Les cellules conformes à l'invention sont les suivantes :
- une première cellule comprenant, comme électrolyte, un électrolyte comprenant du 1,3-dioxolane (DOL), dans lequel est dissous du LiTFSI à une concentration de 1 mol/L ;
- une deuxième cellule comprenant, comme électrolyte, un électrolyte comprenant du 2-méthyl-1,3-dioxolane, dans lequel est dissous du LiTFSI à une concentration de 1 mol/L ; et
- une troisième cellule comprenant, comme électrolyte, un électrolyte comprenant du 4-méthyl-1,3-dioxolane, dans lequel est dissous du LiTFSI à une concentration de 1 mol/L.

Ces différentes cellules sont soumises à un test de cyclage galvanostatique, consistant à appliquer un premier cycle de charge/décharge entre 1 V et 0,01 V à un régime C/20 avec un palier à 0,01 V maintenu jusqu'à atteindre un courant correspondant à un régime de C/100 puis un régime de C/10 pour les cycles consécutifs avec un palier à 0,01 V maintenu jusqu'à atteindre un courant correspondant à un régime de C/50 pour chaque cycle.

Les résultats sont reportés sur la figure 2, qui illustre l'évolution de la capacité spécifique C (en mAh/g) en fonction du nombre de cycles N pour les trois cellules susmentionnées, les courbes étant respectivement référencées de courbe a) pour la première cellule susmentionnée à courbe c) pour la troisième cellule susmentionnée.

Il ressort clairement de ces courbes, que les cellules conformes à l'invention présentent une excellente rétention en cyclage (autour de 500 mAh/g après 30 cycles), que le 1,3-dioxolane soit substitué ou non.

### EXEMPLE 3

Le présent exemple illustre des cellules électrochimiques conformes à l'invention, se présentant sous forme d'une pile bouton comprenant :
- comme électrode négative, une électrode comprenant, comme matériau actif, un composite silicium-graphite ;
- comme électrode positive, une électrode comprenant, comme matériau actif, du LiFePO₄ ; et
- un électrolyte disposé entre ladite électrode positive et l'électrode négative, dont la composition sera explicitée ci-dessous.

L'électrode négative est obtenue par enduction, sur une feuille en cuivre, d'une encre composée de 90% massique d'un composite silicium-graphite, 5% massique d'un conducteur électronique (plus spécifiquement, un mélange de noir de carbone de grade Super P® et de fibres de carbone VGCF) et 5% massique d'un liant polymérique (plus spécifiquement, un mélange de carboxyméthylcellulose (à 250 000 g/mol) et de acide polyacrylique (à 250 000 g/mol). Cette électrode est calandrée puis découpée sous forme d'un disque de diamètre 14 mm.

L'électrode positive est obtenue par enduction, sur une feuille en aluminium d'une encre composée de 90,5% massique de LiFePO₄, 5% massique d'un conducteur électronique (plus spécifiquement, un mélange de noir de carbone de grade Super P® et de fibres de carbone VGCF) et 4,5% massique d'un liant polymérique PVDF. Cette électrode est calandrée puis découpée sous forme d'un disque de diamètre 14 mm.

Les piles boutons sont fabriquées à partir de ces électrodes en empilant :
- un disque d'électrode positive ;
- un disque d'électrode négative ; et
- un séparateur composé d'un disque en Celgard® de référence C2400 (qui est une membrane en polypropylène), lequel séparateur est imbibé d'un électrolyte.

Les cellules conformes à l'invention sont les suivantes :
- une première cellule comprenant, comme électrolyte, un électrolyte comprenant du tétrahydrofurane (THF), dans lequel est dissous du LiTFSI à une concentration de 1 mol/L ;
- une deuxième cellule comprenant, comme électrolyte, un électrolyte comprenant du tétrahydrofurane, dans lequel est dissous du LiTFSI à une concentration de 1 mol/L,
ces deux cellules étant identiques de sorte à doubler les essais.

Ces différentes cellules sont soumises à un test de cyclage galvanostatique, consistant à appliquer un premier cycle de charge/décharge entre 3,7 V et 2 V à un régime C/20 avec un palier à 3,7 V maintenu pendant 2 heures puis un régime de C/10 avec un palier de 3,7 V maintenu jusqu'à atteindre un courant correspondant à un régime de C/50 pour le deuxième et enfin un régime de C/5 pour les cycles consécutifs avec un palier à 3,7 V maintenu jusqu'à atteindre un courant correspondant à un régime de C/50 pour chaque cycle.

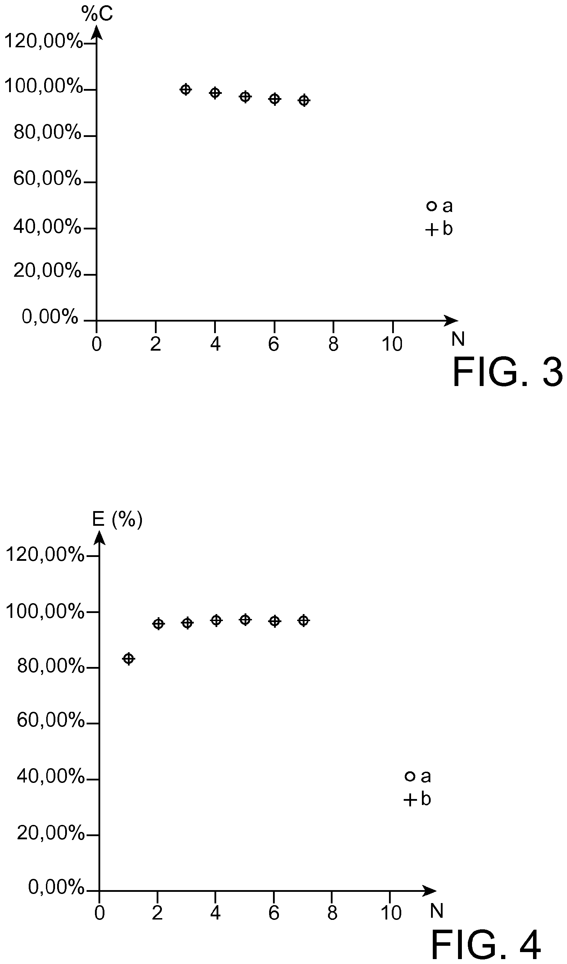

Les résultats sont reportés sur la figure 3, qui illustre l'évolution du pourcentage de la capacité spécifique initiale %C (en %) en fonction du nombre de cycles N, les courbes étant respectivement référencées de courbe a) pour la première cellule susmentionnée à courbe b) pour la deuxième cellule susmentionnée.

Il ressort clairement de ces courbes, que les cellules conformes à l'invention présentent une excellente rétention en cyclage (autour de 100%) à l'issue de plus d'une dizaine de cycles.

En parallèle, il a été également déterminé les efficacités, c'est-à-dire les rapports des capacités en décharge sur les capacités en charge (exprimées pour le matériau actif LiFePO₄), exprimées en %, en fonction du nombre de cycles.

Il ressort clairement de ces courbes, que les cellules conformes à l'invention présentent une excellente efficacité au premier cycle (supérieure à 80%) puis lors des cycles suivants (proche de 100%).

### EXEMPLE 4

Le présent exemple illustre des cellules électrochimiques conformes à l'invention et des cellules comparatives, se présentant sous forme d'une pile bouton comprenant :
- comme électrode négative, une électrode négative constituée de lithium métallique ; et
- comme électrode positive, une électrode comprenant, comme matériau actif, un composite silicium-graphite ; et
- un électrolyte disposé entre ladite électrode positive et l'électrode négative, dont la composition sera explicitée ci-dessous.

L'électrode négative est obtenue par découpe, dans un feuillard en lithium métallique, d'un disque de diamètre 16 mm.

L'électrode positive est obtenue par enduction, sur une feuille en cuivre, d'une encre composée de 90% massique d'un composite silicium-graphite, 5% massique d'un conducteur électronique (plus spécifiquement, un mélange de noir de carbone de grade Super P® et de fibres de carbone VGCF) et 5% massique d'un liant polymérique (plus spécifiquement, un mélange de carboxyméthylcellulose (à 250 000 g/mol) et de acide polyacrylique (à 250 000 g/mol). Cette électrode est calandrée puis découpée sous forme d'un disque de diamètre 14 mm.

Les piles boutons sont fabriquées à partir de ces électrodes en empilant :
- un disque d'électrode positive ;
- un disque d'électrode négative ;
- un séparateur composé de la superposition d'un disque en Viledon® (référence FS2207-25-DA WA) (qui est une membrane en fibres non tissées de polyoléfines (polypropylène/polyéthylène)) et d'un disque en Celgard® (référence C2400) (qui est une membrane en polypropylène), lequel séparateur est imbibé d'un électrolyte.

Les cellules conformes à l'invention sont les suivantes :
- une première cellule comprenant, comme électrolyte, un électrolyte comprenant du 1,3-dioxolane (DOL), dans lequel est dissous du LiTFSI à une concentration de 1 mol/L ;
- une deuxième cellule comprenant, comme électrolyte, un électrolyte comprenant du 1,3-dioxolane (DOL), du sel de lithium LiTFSI à 1 mol/L, 2% massique de carbonate de vinylène par rapport à la masse totale de 1,3-dioxolane et de sel de lithium;
- une troisième cellule comprenant, comme électrolyte, un électrolyte comprenant du 1,3-dioxolane, un sel de lithium LiTFSI à une concentration de 1 mol.L⁻¹ et du carbonate de fluoroéthylène à hauteur de 10% massique par rapport à la masse totale du 1,3-dioxolane et du sel de lithium; et
- une quatrième cellule comprenant, comme électrolyte, un électrolyte comprenant du 1,3-dioxolane, un sel de lithium LiTFSI à une concentration de 1 mol.L⁻¹, du carbonate de vinylène à hauteur de 2% par rapport à la masse totale du 1,3-dioxolane et du sel de lithium, du carbonate de fluoroéthylène à hauteur de 10% massique par rapport à la masse totale du 1,3-dioxolane et du sel de lithium.

Ces différentes cellules sont soumises à un test de cyclage galvanostatique, consistant à appliquer un premier cycle de charge/décharge entre 1V et 0,01 V à un régime C/20 puis un régime de C/10 pour les cycles consécutifs avec un palier à 0,01 V maintenu jusqu'à atteindre un courant correspondant à un régime de C/50 pour chaque cycle.

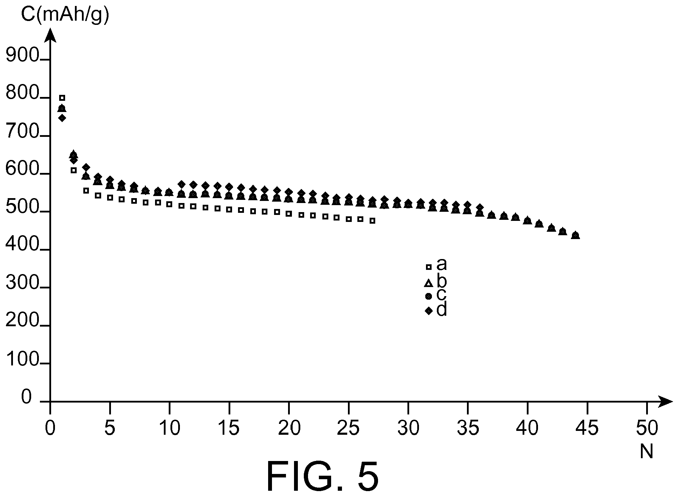

Les résultats sont reportés sur la figure 5, qui illustre l'évolution de la capacité spécifique C (en mAh/g) en fonction du nombre de cycles N pour les cellules susmentionnées, les courbes étant respectivement référencées de courbe a) pour la première cellule susmentionnée à courbe d) pour la quatrième cellule susmentionnée.

Il ressort clairement de ces courbes, que les cellules conformes à l'invention présentent une excellente rétention en cyclage (autour de 500 mAh/g après 50 cycles) et ce que l'électrolyte comprenne des additifs VC et/ou FEC ou pas.

### EXEMPLE 5

Le présent exemple illustre une cellule électrochimique conforme à l'invention se présentant sous forme d'une pile bouton comprenant :
- comme électrode négative, une électrode négative constituée de lithium métallique ; et
- comme électrode positive, une électrode comprenant, comme matériau actif, un composite silicium-graphite ; et
- un électrolyte disposé entre ladite électrode positive et l'électrode négative, dont la composition sera explicitée ci-dessous.

L'électrode négative est obtenue par découpe, dans un feuillard en lithium métallique, d'un disque de diamètre 16 mm.

L'électrode positive est obtenue par enduction, sur une feuille en cuivre, d'une encre composée de 90% massique d'un composite silicium-graphite, 5% massique d'un conducteur électronique (plus spécifiquement, un mélange de noir de carbone de grade Super P® et de fibres de carbone VGCF et 5% massique d'un liant polymérique (plus spécifiquement, un mélange de carboxyméthylcellulose (à 250 000 g/mol) et de acide polyacrylique (à 250 000 g/mol). Cette électrode est calandrée puis découpée sous forme d'un disque de diamètre 14 mm.

Les piles boutons sont fabriquées à partir de ces électrodes en empilant :
- un disque d'électrode positive ;
- un disque d'électrode négative ; et
- un séparateur composé de la superposition d'un disque en Viledon® (référence FS2207-25-DA WA) (qui est une membrane en fibres non tissées de polyoléfines (polypropylène/polyéthylène)) et d'un disque en Celgard® (référence C2400) (qui est une membrane en polypropylène), lequel séparateur est imbibé d'un électrolyte.

L'électrolyte comprend du 2-méthyltétrahydrofurane, dans lequel est dissous du LiTFSI à une concentration de 1 mol/L.

Cette cellule est soumise à un test de cyclage galvanostatique, consistant à appliquer un premier cycle de charge/décharge entre 1 V et 0,01 V à un régime C/20 avec un palier à 0,01 V maintenu jusqu'à atteindre un courant correspondant à un régime de C/100 puis un régime de C/5 pour les cycles consécutifs avec un palier à 0,01 V maintenu jusqu'à atteindre un courant correspondant à un régime de C/100 pour chaque cycle.

De ce test, il ressort clairement que la cellule conforme à l'invention présente une excellente rétention au cyclage à l'issue de 20 cycles.

## Revendications

1. Cellule électrochimique pour batterie au lithium comprenant deux électrodes de polarité opposée, dont l'une des électrodes comporte, comme matériau actif, un matériau composite graphite-silicium et comprenant un électrolyte comprenant un sel de lithium et au moins un composé choisi parmi les composés oxolanes, les composés oxanes et les mélanges de ceux-ci, ledit matériau composite graphite-silicium étant un matériau comprenant des particules de silicium agrégées sur des particules de graphite, l'ensemble étant dispersé au sein d'une matrice de carbone.

2. Cellule électrochimique selon la revendication 1, dans laquelle les composés oxolanes sont choisis parmi les composés oxolanes comprenant, dans le cycle, un atome d'oxygène.

3. Cellule électrochimique selon l'une quelconque des revendications précédentes, dans laquelle l'électrolyte comprend un composé oxolane, qui est du tétrahydrofurane ou du 2-méthyltétrahydrofurane.

4. Cellule électrochimique selon la revendication 1, dans laquelle les composés oxolanes sont choisis parmi les composés oxolanes comprenant, dans le cycle, deux atomes d'oxygène.

5. Cellule électrochimique selon la revendication 1 ou 4, dans laquelle l'électrolyte comprend un composé oxolane, qui est
*le 1,3-dioxolane de formule (I) suivante : 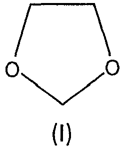
*le 2-méthyl-1,3-dioxolane de formule (II) suivante : 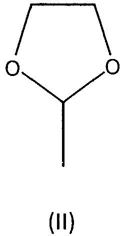 et/ou
*le 4-méthyl-1,3-dioxolane de formule (III) suivante :

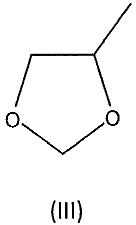

6. Cellule électrochimique la revendication 1, dans laquelle les composés oxanes sont des composés oxanes comprenant, dans son cycle, deux atomes d'oxygène.

7. Cellule électrochimique selon la revendication 1 ou 6, dans laquelle l'électrolyte comprend un composé oxane, qui est le 1,4-dioxane de formule (IV) suivante :

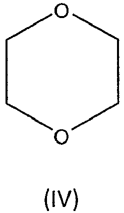

8. Cellule électrochimique selon l'une quelconque des revendications précédentes, dans laquelle l'électrolyte est constitué uniquement d'un ou plusieurs composés choisi parmi les composés oxolanes, les composés oxanes et les mélanges de ceux-ci et d'un sel de lithium.

9. Cellule électrochimique selon l'une quelconque des revendications 1 à 8, dans laquelle l'électrolyte comporte un ou plusieurs additifs choisis parmi le carbonate de vinylène, le carbonate de fluoroéthylène et les mélanges de ceux-ci.

10. Cellule électrochimique selon l'une quelconque des revendications précédentes, dans laquelle l'électrolyte est :
- un électrolyte comprenant du 1,3-dioxolane et un sel de lithium LiTFSI, par exemple, à une concentration de 1 mol.L⁻¹ ;
- un électrolyte comprenant du tétrahydrofurane et un sel de lithium LiTFSI, par exemple, à une concentration de 1 mol.L⁻¹ ;
- un électrolyte comprenant du 2-méthyl-1,3-dioxolane et un sel de lithium LiTFSI, par exemple, à une concentration de 1 mol.L⁻¹ ;
- un électrolyte comprenant du 4-méthyl-1,2-dioxolane et un sel de lithium LiTFSI, par exemple, à une concentration de 1 mol.L⁻¹ ;
- un électrolyte comprenant un mélange de 1,3-dioxolane et de 1,4-dioxane (50/50 en volume) et un sel de lithium LiTFSI, par exemple, à une concentration de 1 mol.L⁻¹ ;
- un électrolyte comprenant du 1,3-dioxolane, un sel de lithium LiTFSI, par exemple, à une concentration de 1 mol.L⁻¹ et du carbonate de vinylène à hauteur de 2% massique par rapport à la masse totale du 1,3-dioxolane et du sel de lithium ;
- un électrolyte comprenant du 1,3-dioxolane, un sel de lithium LiTFSI, par exemple, à une concentration de 1 mol.L⁻¹ et du carbonate de fluoroéthylène à hauteur de 10% massique par rapport à la masse totale du 1,3-dioxolane et du sel de lithium ;
- un électrolyte comprenant du 1,3-dioxolane, un sel de lithium LiTFSl, par exemple, à une concentration de 1 mol.L⁻¹, du carbonate de vinylène à hauteur de 2% par rapport à la masse totale du 1,3-dioxolane et du sel de lithium, du carbonate de fluoroéthylène à hauteur de 10% massique par rapport à la masse totale du 1,3-dioxolane et du sel de lithium ; ou
- un électrolyte comprenant du 2-méthyltétrahydrofurane et un sel de lithium LiTFSI, par exemple, à une concentration de 1 mol.L⁻¹.

11. Cellule électrochimique selon l'une quelconque des revendications précédentes, dans laquelle l'électrode comprenant, comme matériau actif, un matériau composite silicium-graphite, est une électrode négative, l'électrode de polarité opposée étant ainsi une électrode positive.

12. Cellule électrochimique selon la revendication 11, dans laquelle l'électrode positive comprend, comme matériau actif, un matériau d'insertion du lithium du type phosphate lithié comprenant au moins un élément métallique de transition.

13. Cellule électrochimique selon l'une quelconque des revendications 1 à 10, dans laquelle l'électrode comprenant, comme matériau actif, un matériau composite silicium-graphite, est une électrode positive, l'électrode de polarité opposée étant ainsi une électrode négative.

14. Cellule électrochimique selon la revendication 13, dans laquelle l'électrode négative comprend, comme matériau actif, du lithium métallique.

15. Batterie au lithium comprenant au moins une cellule électrochimique selon l'une quelconque des revendications 1 à 14.

## Patentansprüche

1. Elektrochemische Zelle für eine Lithiumbatterie, umfassend zwei Elektroden mit entgegengesetzter Polarität, von denen eine der Elektroden als aktives Material ein Graphit-Silizium-Verbundmaterial umfasst, und einen Elektrolyt umfasst, der ein Lithiumsalz enthält sowie wenigstens eine Verbindung, die ausgewählt ist aus den Oxolanverbindungen, den Oxanverbindungen und deren Mischungen, wobei das Graphit-Silizium-Verbundmaterial ein Material ist, das Siliziumpartikel aggregiert auf Graphitpartikeln enthält, wobei die Gesamtheit innerhalb einer Kohlenstoffmatrix dispergiert ist.

2. Elektrochemische Zelle nach Anspruch 1, bei der die Oxolanverbindungen ausgewählt sind aus den Oxolanverbindungen, die im Ring ein Sauerstoffatom enthalten.

3. Elektrochemische Zelle nach einem der vorhergehenden Ansprüche, bei der der Elektrolyt eine Oxolanverbindung enthält, die Tetrahydrofuran oder 2-Methyltetrahydrofuran ist.

4. Elektrochemische Zelle nach Anspruch 1, bei der die Oxolanverbindungen ausgewählt sind aus den Oxolanverbindungen, die im Ring zwei Sauerstoffatome enthalten.

5. Elektrochemische Zelle nach Anspruch 1 oder 4, bei der der Elektrolyt eine Oxolanverbindung umfasst, die Folgendes ist:
* 1,3-Dioxolan der nachfolgenden Formel (I): 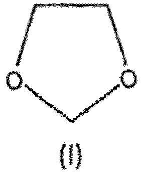
* 2-Methyl-1,3-Dioxolan der nachfolgenden Formel (II): 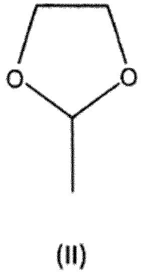 und/oder
* 4-Methyl-1,3-Dioxolan der nachfolgenden Formel (III):

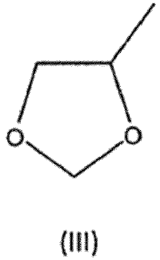

6. Elektrochemische Zelle nach Anspruch 1, bei der die Oxanverbindungen Oxanverbindungen sind, die in ihrem Ring zwei Sauerstoffatome enthalten.

7. Elektrochemische Zelle nach Anspruch 1 oder 6, bei der der Elektrolyt eine Oxanverbindung umfasst, die 1,4-Dioxan der nachfolgenden Formel (IV) ist:

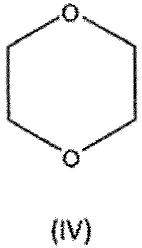

8. Elektrochemische Zelle nach einem der vorhergehenden Ansprüche, bei der der Elektrolyt ausschließlich aus einer oder mehreren Verbindungen gebildet ist, ausgewählt aus den Oxolanverbindungen, den Oxanverbindungen und deren Mischungen sowie einem Lithiumsalz.

9. Elektrochemische Zelle nach einem der Ansprüche 1 bis 8, bei der der Elektrolyt ein oder mehrere Additive umfasst, ausgewählt aus Vinylenkarbonat, Fluorethylenkarbonat und deren Mischungen.

10. Elektrochemische Zelle nach einem der vorhergehenden Ansprüche, bei der Elektrolyt Folgendes ist:
- ein Elektrolyt, umfassend 1,3-Dioxolan und ein Lithiumsalz LiTFSI, beispielsweise mit einer Konzentration von 1 mol.L⁻¹,
- ein Elektrolyt, umfassend Tetrahydrofuran und ein Lithiumsalz LiTFSI, beispielsweise mit einer Konzentration von 1 mol.L⁻¹,
- ein Elektrolyt, umfassend 2-Methyl-1,3-Dioxolan und ein Lithiumsalz LiTFSI, beispielsweise mit einer Konzentration von 1 mol.L⁻¹,
- ein Elektrolyt, umfassend 4-Methyl-1,2-Dioxolan und ein Lithiumsalz LiTFSI, beispielsweise mit einer Konzentration von 1 mol.L⁻¹,
- ein Elektrolyt, umfassend eine Mischung von 1,3-Dioxolan und 1,4-Dioxan (50/50 im Volumen) und ein Lithiumsalz LiTFSI, beispielsweise mit einer Konzentration von 1 mol.L⁻¹;
- ein Elektrolyt, umfassend 1,3-Dioxolan, ein Lithiumsalz LiTFSI, beispielsweise mit einer Konzentration von 1 mol.L⁻¹, und Vinylenkarbonat im Bereich von 2 Massen-% bezogen auf die Gesamtmasse des 1,3-Dioxolans und des Lithiumsalzes;
- ein Elektrolyt, umfassend 1,3-Dioxolan, ein Lithiumsalz LiTFSI, beispielsweise mit einer Konzentration von 1 mol.L⁻¹, und Fluorethylenkarbonat im Bereich von 10 Massen-% bezogen auf die Gesamtmasse des 1,3-Dioxolans und des Lithiumsalzes;
- ein Elektrolyt, umfassend 1,3-Dioxolan, ein Lithiumsalz LiTFSI, beispielsweise mit einer Konzentration von 1 mol.L⁻¹, Vinylenkarbonat im Bereich von 2 % bezogen auf die Gesamtmasse des 1,3-Dioxolans und des Lithiumsalzes, Fluorethylenkarbonat im Bereich von 10 Massen-% bezogen auf die Gesamtmasse des 1,3-Dioxolans und des Lithiumsalzes; oder
- ein Elektrolyt, umfassend 2-Methyltetrahydrofuran und ein Lithiumsalz LiTFSI, beispielsweise mit einer Konzentration von 1 mol.L⁻¹.

11. Elektrochemische Zelle nach einem der vorhergehenden Ansprüche, bei der die Elektrode, die als aktives Material ein Silizium-Graphit-Verbundmaterial enthält, eine negative Elektrode ist, wobei die Elektrode mit entgegengesetzter Polarität somit eine positive Elektrode ist.

12. Elektrochemische Zelle nach Anspruch 11, bei der die positive Elektrode als aktives Material ein Lithiuminsertionsmaterial vom Typ Lithiumphosphat umfasst, das wenigstens ein metallisches Übergangselement enthält.

13. Elektrochemische Zelle nach einem der Ansprüche 1 bis 10, bei der die Elektrode, die als aktives Material ein Silizium-Graphit-Verbundmaterial enthält, eine positive Elektrode ist, wobei die Elektrode mit entgegengesetzter Polarität somit eine negative Elektrode ist.

14. Elektrochemische Zelle nach Anspruch 13, bei der die negative Elektrode als aktives Material metallisches Lithium enthält.

15. Lithiumbatterie, umfassend wenigstens eine elektrochemische Zelle nach einem der Ansprüche 1 bis 14.

## Claims

1. Electrochemical cell for a lithium battery comprising two elements with opposite polarities, in which one of the electrodes has a graphite-silicon composite material as its active material, and comprising an electrolyte comprising a lithium salt and at least one compound chosen from among oxolane compounds, oxane compounds and mixtures thereof, said graphite-silicon composite material being a material comprising silicon particles aggregated onto graphite particles, the assembly being dispersed within a carbon matrix.

2. Electrochemical cell according to claim 1, in which the oxolane compounds are chosen from among oxolane compounds comprising an oxygen atom in the cycle.

3. Electrochemical cell according to one of the preceding claims, in which the electrolyte comprises an oxolane compound, that is tetrahydrofurane or 2-methyltetrahydrofurane.

4. Electrochemical cell according to claim 1, in which the oxolane compounds are chosen from among oxolane compounds comprising two oxygen atoms in the cycle.

5. Electrochemical cell according to claim 1 or 4, in which the electrolyte comprises an oxolane, that is
* 1,3-dioxolane with the following formula (I): 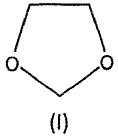
* 2-methyl-1,3-dioxolane with the following formula (II): 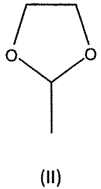 and/or
* 4-methyl-1,3-dioxolane with the following formula (III):

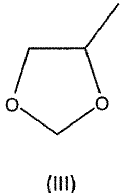

6. Electrochemical cell according to claim 1, in which the oxane compounds are oxane compounds comprising two oxygen atoms in the cycle.

7. Electrochemical cell according to claim 1 or 6, in which the electrolyte comprises an oxane compound, that is 1,4-dioxane with the following formula (IV):

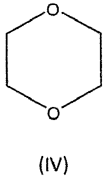

8. Electrochemical cell according to any one of the preceding claims, in which the electrolyte is composed solely of one or several compounds chosen from among oxolane compounds, oxane compounds and mixtures of these compounds with a lithium salt.

9. Electrochemical cell according to any one of claims 1 to 8, in which the electrolyte comprises one or several additives chosen from among vinylene carbonate, fluoroethylene carbonate and mixtures thereof.

10. Electrochemical cell according to any one of the preceding claims, in which the electrolyte is:
- an electrolyte comprising 1,3-dioxolane and a lithium salt LiTFSi, for example with a concentration of 1 mol.L⁻¹;
- an electrolyte comprising tetrahydrofurane and a lithium salt LiTFSi, for example with a concentration of 1 mol.L⁻¹;
- an electrolyte comprising 2-methyl-1,3-dioxolane and a lithium salt LiTFSi, for example with a concentration of 1 mol.L⁻¹;
- an electrolyte comprising 4-methyl-1,3-dioxolane and a lithium salt LiTFSi, for example with a concentration of 1 mol.L⁻¹;
- an electrolyte comprising a mixture of 1,3-dioxolane and 1,4-dioxane (50/50 by volume) and a lithium salt LiTFSi, for example with a concentration of 1 mol.L⁻¹;
- an electrolyte comprising 1,3-dioxolane, a lithium salt LiTFSi, for example with a concentration of 1 mol.L⁻¹, and vinylene carbonate with a content of 2% by mass relative to the total mass of 1,3-dioxolane and the lithium salt;
- an electrolyte comprising 1,3-dioxolane, a lithium salt LiTFSi, for example with a concentration of 1 mol.L⁻¹, and fluoroethylene carbonate with a content of 10% by mass relative to the total mass of 1,3-dioxolane and the lithium salt;
- an electrolyte comprising 1,3-dioxolane, a lithium salt LiTFSi, for example with a concentration of 1 mol.L⁻¹, vinylene carbonate with a content of 2% by mass relative to the total mass of 1,3-dioxolane and the lithium salt, and fluoroethylene carbonate with a content of 10% by mass relative to the total mass of 1,3-dioxolane and the lithium salt; or
- an electrolyte comprising 2-methyltetrahydrofurane and a lithium salt LiTFSi, for example with a concentration of 1 mol.L⁻¹.

11. Electrochemical cell according to any one of the preceding claims, in which the electrolyte comprising a silicon-graphite composite material as the active material is a negative electrode, the electrode with the opposite polarity thus being a positive electrode.

12. Electrochemical cell according to claim 11, in which the positive electrode comprises a lithium insertion material of the lithiated phosphate type comprising at least one metallic transition element, as its active material.

13. Electrochemical cell according to one of claims 1 to 10, in which the electrode comprising a silicon-graphite composite material as its active material is a positive electrode, the electrode with the opposite polarity thus being a negative electrode.

14. Electrochemical cell according to 13, in which the negative electrode comprises metallic lithium as its active material.

15. Lithium battery comprising at least one electrochemical cell according to one of claims 1 to 14.
